# DEMANDE DE BREVET EUROPEEN

(11) **EP 4 491 471 A1**
(43) Date de publication de la demande: **15.01.2025**
(21) Numéro de dépôt: 24165717.0
(22) Date de dépôt: 22.03.2024
(51) Int. Cl.: B60T 13/74, F16D 55/225

(54) **MACHINE ÉLECTRIQUE TOURNANTE**

(30) Priorité: 08.06.2023 FR 2305776
(71) Demandeur: Telma, 95310 Saint-Ouen L'Aumône (FR)
(72) Inventeur: AKAFOU, Mbarek, 78130 LES MUREAUX (FR); LOUNIS, Rafik, 95800 CERGY (FR); QUENNET, Nicolas, 95240 CORMEILLES EN PARISIS (FR)
(74) Mandataire: Plasseraud IP

(57) **Abrégé**

L'invention concerne une machine électrique tournante (2) comprenant un stator (4) et un rotor (6) propre à pivoter par rapport au stator, le stator comportant un premier support (8) pourvu de noyaux polaires (12) et des premières bobines inductrices (14) agencées autour des noyaux polaires, les noyaux polaires (12) ayant chacun un axe (Y1 ); le rotor comportant une première face (22) s'étendant perpendiculairement aux axes des noyaux polaires. La première face (22) du rotor est recouverte par une couche (26) d'un premier revêtement, le premier revêtement étant réalisée dans un matériau ayant une conductivité électromagnétique supérieure à la conductivité électromagnétique de l'acier.

## Description

### Domaine technique de l'invention

La présente invention concerne une machine électrique tournante. En particulier, la présente invention concerne un appareil à courants de Foucault.

### Etat de la technique antérieure

Il a été constaté que les machines électriques tournante ont de faible capacité de freinage, lorsque l'arbre de transmission tourne à faible vitesse. Or, dans certaine situation, application ou pour certains appareils comme les éoliennes, il peut être intéressant d'avoir une capacité de freinage importante permettant de ralentir ou de stopper rapidement un mouvement même lorsque celui-ci tourne a de faible vitesse.

### Présentation de l'invention

Un but de la présente invention est d'augmenter le couple de freinage des machines électriques, lorsque l'arbre de transmission tourne à faible vitesse.

### Résumé de l'invention

La présente invention a pour objet une machine électrique tournante comprenant un stator et au moins un rotor propre à pivoter par rapport au stator autour d'un axe de rotation, le stator comportant un premier support pourvu de noyaux polaires et des premières bobines inductrices agencées autour des noyaux polaires, les noyaux polaires ayant chacun un axe; ledit au moins un rotor comportant au moins une première face s'étendant perpendiculairement aux axes des noyaux polaires, caractérisé en ce qu'au moins une partie de la première face du rotor disposée en regard des premières bobines inductrices est recouverte par au moins une couche d'un premier revêtement ,le premier revêtement étant réalisée dans un matériau ayant une conductivité électromagnétique supérieure à la conductivité électromagnétique de l'acier.

Les caractéristiques exposées dans les paragraphes suivants peuvent, optionnellement, être mises en oeuvre. Elles peuvent être mises en oeuvre indépendamment les unes des autres ou en combinaison les unes avec les autres :
- la machine électrique tournante comporte un deuxième support pourvu de noyaux polaires et des deuxièmes bobines inductrices agencées autour des noyaux polaires, les noyaux polaires ayant chacun un axe; et dans lequel le rotor comporte une deuxième face opposée à la première face, au moins une partie de la deuxième face du rotor agencée en regard des deuxièmes bobines inductrices étant recouverte par au moins une couche du premier revêtement.
- la machine électrique tournante comporte un rotor supplémentaire, dit deuxième rotor, ledit deuxième rotor s'étendant dans un plan parallèle au rotor, ledit deuxième rotor comportant au moins une première face s'étendant perpendiculairement aux axes des noyaux polaires, caractérisé en ce qu'au moins une partie de la première face du deuxième rotor disposée en regard des premières bobines inductrices est recouverte par une couche d'au moins un premier revêtement.
- le matériau du premier revêtement comprend un matériau parmi du cuivre, de l'argent et de l'or.
- la couche du premier revêtement présente une épaisseur comprise entre 0.5 millimètre et 3 millimètres.
- la couche du premier revêtement présente une épaisseur comprise entre 0.5 millimètre et 2 millimètres.
- la machine électrique tournante comprend une couche d'un deuxième revêtement, disposée au-dessus de la couche du premier revêtement.
- le deuxième revêtement comprend un matériau parmi un acier ou une fonte.
- la couche du deuxième revêtement présente une épaisseur comprise entre 0.5 millimètre et 3 millimètres.
- la couche du deuxième revêtement présente une épaisseur comprise entre 0.5 millimètre et 1.5 millimètres.

### Brève description des figures

[Fig. 1] est une vue schématique en coupe d'une machine électrique tournante selon un premier mode de réalisation de l'invention, la vue en coupe étant réalisée selon un plan de coupe axiale par rapport à l'axe de rotation X-X;
[Fig. 2] est une vue d'une section d'un rotor d'une machine électrique tournante selon une variante du premier mode de réalisation, la section étant mise en oeuvre selon un plan de coupe radial à l'axe de rotation X-X ;
[Fig. 3] est un graphe représentant des courbes du couple maximum délivré par des rotors en fonction de la vitesse de rotation de l'arbre de transmission ;
[Fig. 4] est une vue schématique en coupe d'une machine électrique tournante selon un deuxième mode de réalisation de l'invention, la vue en coupe étant réalisée selon un plan de coupe axiale par rapport à l'axe de rotation X-X ;
[Fig. 5] est un graphe représentant le couple maximum délivré par le rotor en fonction de la vitesse de rotation de l'arbre de transmission pour différents revêtements.

### Description détaillée de l'invention

L'invention concerne une machine électrique tournante. Cette machine électrique tournante est par exemple un ralentisseur électromagnétique, un ensemble ralentisseur électromagnétique et génératrice, un moteur ou un générateur. Sur les figures, seul un appareil à courant de Foucault a été représenté. L'invention s'applique par exemple à un ensemble ralentisseur électromagnétique et génératrice, à un moteur ou à un démarreur.

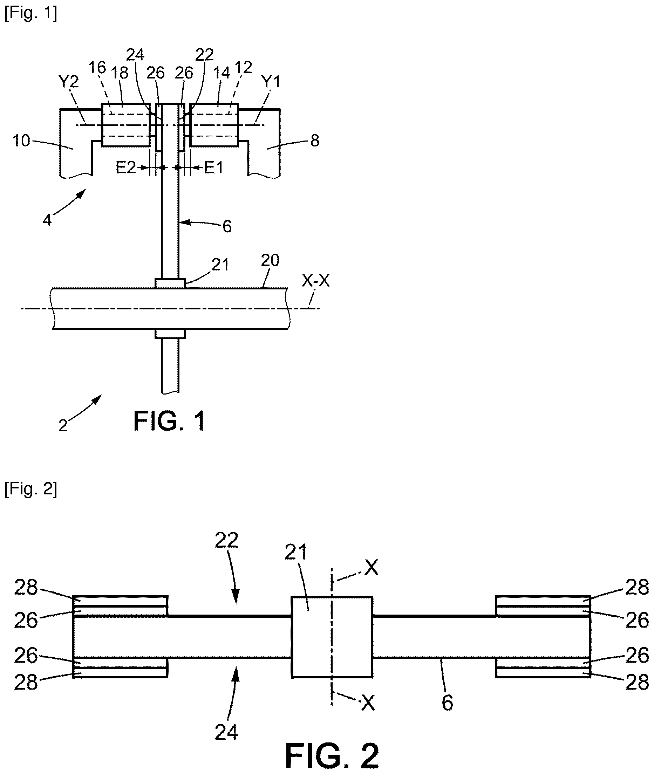

En référence à la figure 1, l'appareil à courant de Foucault 2 selon un premier mode de réalisation de l'invention comporte un stator 4 et un rotor 6 propre à pivoter par rapport au stator 4. Le rotor est adapté pour pivoter autour de l'axe de rotation X-X. Le stator 4 est destiné à être fixé à un élément fixe d'un appareil tel qu'au châssis d'un véhicule, à un carter d'une boîte de vitesse d'un véhicule ou à un boitier d'une éolienne. Le stator 4 comporte un premier support 8 et un deuxième support 10.

Le premier support 8 est pourvu de noyaux polaires 12 ayant un axe Y1 et de premières bobines inductrices 14 agencées autour des noyaux polaires. Les noyaux polaires 12 sont représentés en pointillé sur les figures. De la même façon, le deuxième support 10 est pourvu de noyaux polaires 16 ayant un axe Y2 et de premières bobines inductrices 18 agencées autour du noyau polaire 16.

Pour simplifier la figure 1, pour chaque support 8 et 10, un seul noyau polaire 12,16 et une seule bobine inductrice 14,18 ont été représentés. En réalité, les supports 8, 10 comportent plusieurs noyaux polaires 12,16 et plusieurs bobines inductrices 14,18 disposés le long d'un cercle disposé autour de l'axe de rotation X-X.

Le rotor 6 est destiné à être fixé à un arbre de transmission 20 par exemple par l'intermédiaire d'un moyeu 21 monté fixe en rotation par rapport à l'arbre de transmission. L'arbre de transmission 20 est relié à un dispositif d'entrainement non représenté. L'arbre de transmission est propre à pivoter autour de l'axe de rotation X-X.

Le rotor 6 peut être constitué par un disque, un anneau, une portion de cylindre ou une coiffe légèrement bombée. Il a été représenté schématiquement par un disque sur la figure 1.

Le rotor 6 est généralement réalisé en acier ou en fonte. Le rotor 6 comporte une première face 22 et une deuxième face 24 opposée à la première face. La première face et la deuxième face s'étendent perpendiculairement à l'axe de rotation X-X. La première face 22 est perpendiculaire aux axes Y1 des noyaux polaires 12. La deuxième face 24 est perpendiculaire aux axes Y2 des noyaux polaires 16.

Une partie de la première face 22 disposée en regard des premières bobines inductrices 14 est recouverte par un premier revêtement 26. Le premier revêtement 26 est réalisé dans un matériau ayant une conductivité électromagnétique supérieure à la conductivité électromagnétique de l'acier ou de la fonte.

De préférence, le matériau de réalisation du premier revêtement 26 comprend un matériau parmi du cuivre, de l'argent et de l'or. Avantageusement, ce premier revêtement 26 permet d'augmenter la capacité de freinage exercée par l'appareil à courant de Foucault sur l'arbre de transmission 20, lorsque ce dernier tourne à de faible vitesse. Une vitesse faible est une vitesse sensiblement inférieure à 1400 tours par minutes.

De préférence, le premier revêtement 26 présente une épaisseur comprise entre 0.5 millimètre et 3 millimètres.

De manière encore plus préférentielle, le premier revêtement présente une épaisseur comprise entre 0, 5 millimètre et 2 millimètres.

Dans le mode de réalisation illustré sur la figure 1, une partie de la deuxième face 24 du rotor 6 disposée en regard des deuxièmes bobines inductrices 18 est également recouverte par le premier revêtement 26.

Le premier revêtement 26 recouvrant la deuxième face 24 du rotor 6 est similaire et présente la même épaisseur que le premier revêtement 26 recouvrant la première face 22 du rotor 6.

Un espace de faible dimension, généralement appelé entrefer E1, est disposé entre l'extrémité libre des premières bobines inductrices 14 et le premier revêtement situé sur la première face 22 du rotor. De la même façon, un entrefer E2 est disposé entre l'extrémité libre des deuxièmes bobines inductrices 18 et le premier revêtement situé sur la deuxième face 24 du rotor.

Selon une variante de réalisation illustrée sur la figure 2, le rotor comporte en outre un deuxième revêtement 28 disposé sur le premier revêtement 26. Selon une variante non représentée, le deuxième revêtement peut en outre être disposé sur une partie de la première face 22 et une partie de la deuxième face 24.

De préférence, le deuxième revêtement 28 comprend un matériau parmi un acier ou une fonte.

De préférence, le deuxième revêtement 28 présente une épaisseur comprise entre 0.5 millimètre et 3 millimètres. De manière encore plus préférée, le deuxième revêtement 28 présente une épaisseur comprise entre 0.5 millimètre et 1.5 millimètres.

Avantageusement, le deuxième revêtement permet de protéger le rotor des frottements et de l'usure. Comme l'épaisseur du deuxième revêtement est faible un bon niveau d'efficacité de freinage est maintenu.

Avantageusement, un frein à friction peut être monté sur le rotor lorsque la couche du premier revêtement est recouverte d'une couche d'un deuxième revêtement.

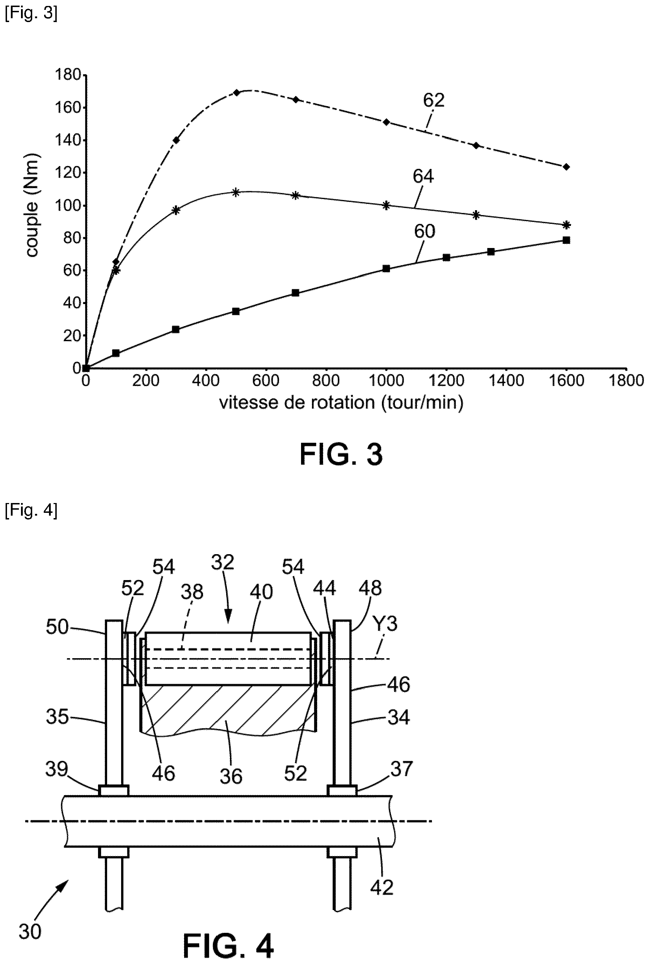

La figure 3 représente un graphe comprenant des courbes représentant l'évolution des couples délivrés par des rotors d"appareil à courant de Foucault selon le premier mode de réalisation. En particulier, la courbe 60 représente le couple exercé par un rotor ayant des faces ne comportant aucun revêtement. La courbe 62 représente le couple délivré par un rotor dont les deux faces 22, 24 possèdent une couche d'un premier revêtement 26 de cuivre de 1.5 millimètre. La courbe 64 représente le couple délivré par un rotor dont les deux faces 22, 24 possèdent une première couche d'un premier revêtement 26 de cuivre de 1.5 millimètre et une deuxième couche de fonte. La deuxième couche est agencée sur la première couche.

Le couple de freinage est significativement augmenté pour les vitesses de rotation inférieure à 1400 tours/minute et lorsque les faces 22, 24 du rotor comprennent une couche du premier revêtement. Le couple de freinage est également augmenté de manière pour les vitesses de rotation inférieure à 1400 tours/minute et lorsque les faces 22, 24 du rotor comprennent une première couche du premier revêtement et une deuxième couche du deuxième revêtement.

La figure 4 représente un appareil à courant de Foucault 30 selon un deuxième mode de réalisation. Cet appareil à courant de Foucault 30 comporte un stator 32, un premier rotor 34, et un deuxième rotor 35. Le premier rotor 34 et le deuxième rotor 35 sont propres à pivoter par rapport au stator 32. En particulier, le premier rotor 34 et le deuxième rotor 35 sont propres à pivoter autour d'un axe de rotation X-X.

Le stator 32 comporte un premier et unique support 36 destiné à être fixé à un élément fixe tel que le carter de la boite de vitesse ou autre.

Le premier support 36 est pourvu de noyaux polaires 38 ayant chacun un axe Y3 et de bobines inductrices 40 agencées autour des noyaux polaires. Pour simplifier la figure 4, un seul noyau polaire et une seule bobine inductrice ont été représentées. En réalité, le support 36 comporte plusieurs noyaux polaires et plusieurs bobines inductrices agencés en cercle autour de l'axe de rotation X-X.

Le premier rotor 34 et le deuxième rotor 35 sont destinés à être fixés à un arbre de transmission 42 par exemple par l'intermédiaire d'un moyeu 37, 39 monté fixe en rotation par rapport à l'arbre de transmission. L'arbre de transmission 42 est relié à un dispositif d'entrainement non représenté. L'arbre de transmission 42 est propre à pivoter autour de l'axe de rotation X-X.

Le premier rotor 34 et le deuxième rotor 35 peuvent être constitués par un disque, un anneau, une portion de cylindre ou une coiffe bombée. Ils ont été représentés schématiquement par un disque sur la figure 4.

Le premier rotor 34 et le deuxième rotor 35 peuvent être réalisé en acier ou en fonte. Le premier rotor 34 et le deuxième rotor 35 comportent chacun une première face 44, 46 agencées en regard des bobines inductrices 40, et une deuxième face 48, 50 opposée à chaque première face 44, 46. Les premières faces 44, 46 et les deuxièmes faces 48, 50 s'étendent perpendiculairement à l'axe de rotation X-X. Les premières faces 44, 46 et les deuxièmes faces 48, 50 sont perpendiculaires aux axes Y3 des noyaux polaires 38.

Dans ce mode de réalisation, au moins une partie de la première face 44 du premier rotor 34 et au moins une partie de la première face 46 du deuxième rotor 35 sont recouvertes par le premier revêtement 52. Le premier revêtement 52 est réalisé dans un matériau ayant une conductivité électromagnétique supérieure à la conductivité électromagnétique de l'acier.

De préférence, le matériau de réalisation du premier revêtement 52 comprend un matériau parmi du cuivre, de l'argent et de l'or.

De préférence, le premier revêtement 52 présente une épaisseur comprise entre 0.5 millimètre et 3 millimètres. De manière encore plus préférentielle, le premier revêtement présente une épaisseur comprise entre 0.5 millimètre et 2 millimètres.

Le premier rotor 34 et le deuxième rotor 35 comportent en outre un deuxième revêtement 54 disposé sur le premier revêtement 52. Selon une variante non représentée, le deuxième revêtement 54 peut en outre recouvrir une partie de la première face 44 du premier rotor 34 et une partie de la première face 46 du deuxième rotor 35.

De préférence, le deuxième revêtement 54 comprend un matériau parmi un acier ou une fonte.

De préférence, le deuxième revêtement 54 présente une épaisseur comprise entre 0.5 millimètre et 3 millimètres. De manière encore plus préférée, le deuxième revêtement 54 présente une épaisseur comprise entre 0.5 millimètre et 1.5 millimètres.

Selon une variante de réalisation non illustrée, le premier rotor 34 et le deuxième rotor 35 ne comportent chacun qu'une couche du premier revêtement 52 et pas de couche d'un deuxième revêtement.

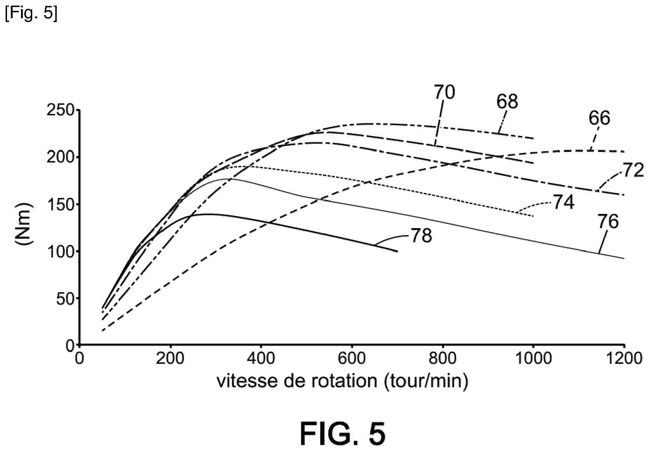

La figure 5 représente un graphe montrant des courbes représentant des couples délivrés par des rotors d'appareils à courant de Foucault selon le deuxième mode de réalisation, lorsque la vitesse du rotor varie entre 0 et environ 1000 tours/minute.

En particulier, la courbe 66 représente les couples exercés sur un rotor ayant des faces ne comportant aucun revêtement, lorsque la vitesse du rotor varie entre 0 et environ 1000 tours/minute. Les courbes 68, 70,72, 74, 76 et 78 représentent les couples exercés sur des rotors ayant une face 22, 24 pourvue d'une couche d'un premier revêtement 26 de cuivre ayant des épaisseurs respectives de 0.5 millimètre, 0.8 millimètre, 1 millimètre, 1.5 millimètre, 2 millimètres et 3 millimètres. Les couples exercés sont significativement plus importants lorsque la couche de cuivre présente une épaisseur inférieure ou égale à 2 millimètres que les couples exercés sur un rotor ayant des faces ne comportant aucun revêtement.

Les courbes 68, 70 représentent les couples exercés sur un rotor ayant une face 22, 24 pourvue d'une couche d'un premier revêtement 26 de cuivre ayant des épaisseurs respectives de 0.5 millimètre et 0.8 millimètre. On peut constater que la couche du premier revêtement peut avantageusement présenter une épaisseur comprise entre 0.5 millimètre et 1 millimètre.

## Revendications

1. Machine électrique tournante (2 ; 30) comprenant un stator (4 ; 32) et au moins un rotor (6 ;34) propre à pivoter par rapport au stator autour d'un axe de rotation (X-X), le stator (4 ;32) comportant un premier support (8 ;36) pourvu de noyaux polaires (12 ;38) et des premières bobines inductrices (14 ; 40) agencées autour des noyaux polaires, les noyaux polaires (12 ;38) ayant chacun un axe (Y1 ; Y3); ledit au moins un rotor (6 ; 34) comportant au moins une première face (22 ; 44) s'étendant perpendiculairement aux axes des noyaux polaires, **caractérisé en ce qu'**au moins une partie de la première face (22 ; 44) du rotor est recouverte par au moins une couche (26 ; 52) d'un premier revêtement ,le premier revêtement étant réalisée dans un matériau ayant une conductivité électromagnétique supérieure à la conductivité électromagnétique de l'acier.

2. Machine électrique tournante (2) selon la revendication 1, qui comporte un deuxième support (10) pourvu de noyaux polaires (16) et des deuxièmes bobines inductrices (18) agencées autour des noyaux polaires, les noyaux polaires (16) ayant chacun un axe (Y2); et dans lequel le rotor (6) comporte une deuxième face (24) opposée à la première face, au moins une partie de la deuxième face (26) du rotor agencée en regard des deuxièmes bobines inductrices (18) étant recouverte par au moins une couche (26) du premier revêtement.

3. Machine électrique tournante (30) selon la revendication 1, qui comporte un rotor supplémentaire, dit deuxième rotor (35), ledit deuxième rotor (35) s'étendant dans un plan parallèle au rotor (34), ledit deuxième rotor (35) comportant au moins une première face (46) s'étendant perpendiculairement aux axes (Y3) des noyaux polaires, **caractérisé en ce qu'**au moins une partie de la première face (46) du deuxième rotor disposée en regard des premières bobines inductrices (40) est recouverte par une couche d'au moins un premier revêtement (52).

4. Machine électrique tournante (2 ; 30) selon l'une quelconque des revendications 1 à 3, dans lequel le matériau du premier revêtement comprend un matériau parmi du cuivre, de l'argent et de l'or.

5. Machine électrique tournante (2 ; 30) selon l'une quelconque des revendications 1 à 4, dans lequel la couche (26 ; 52) du premier revêtement présente une épaisseur comprise entre 0.5 millimètre et 3 millimètres.

6. Machine électrique tournante (2 ; 30) selon l'une quelconque des revendications 1 à 4, dans lequel la couche (26 ; 52) du premier revêtement présente une épaisseur comprise entre 0.5 millimètre et 2 millimètres.

7. Machine électrique tournante (2 ; 30) selon l'une quelconque des revendications 1 à 6, qui comprend une couche (28 ; 5) d'un deuxième revêtement, disposée au-dessus de la couche (26 ; 52) du premier revêtement.

8. Machine électrique tournante (2 ; 30) selon la revendication 7, dans lequel le deuxième revêtement (28 ; 54) comprend un matériau parmi un acier ou une fonte.

9. Machine électrique tournante (2 ; 30) selon l'une quelconque des revendications 7 et 8, dans lequel la couche (28 ; 54) du deuxième revêtement présente une épaisseur comprise entre 0.5 millimètre et 3 millimètres.

10. Machine électrique tournante (2 ; 30) selon l'une quelconque des revendications 7 et 8, dans lequel la couche (28 ; 54) du deuxième revêtement présente une épaisseur comprise entre 0.5 millimètre et 1.5 millimètres.
